# EUROPEAN PATENT SPECIFICATION

(11) **EP 0 323 247 B1**
(45) Date of publication and mention of the grant of the patent: **12.05.1993**
(21) Application number: 88312382.0
(22) Date of filing: 29.12.1988
(51) Int. Cl.: F02K 9/24, F02K 9/34

(54) **Filament winding of case onto solid propellant grain**
Herstellung eines Raketengehäuses durch Wickeln von Fäden um den Feststofftreibsatz
Enroulement d'un filament autour d'un propergol solide

(30) Priority: 29.12.1987 US 139237
(43) Date of publication of application: 05.07.1989
(73) Proprietor: THIOKOL CORPORATION, Ogden Utah 84401 (US)
(72) Inventor: Thomann, Robert, Wilmington Delaware 19808 (US); Latronico, John E., New Castle Delaware 19720 (US); Carson, Don C., North East Maryland 21901 (US)
(74) Representative: Bankes, Stephen Charles Digby

(56) References cited:
- EP-A- 0 181 982
- FR-A- 1 356 673
- FR-A- 2 123 036
- GB-A- 1 072 420
- US-A- 2 995 011
- US-A- 3 518 916
- US-A- 3 731 584

## Description

The present invention relates generally to a method of making a gas generator such as a solid propellant rocket motor. More particularly, the present invention relates to a method of making a gas generator by filament winding of a case onto a solid gas generating grain.

Typically, rocket motors have been built by winding resin impregnated filamentary material such as carbon or aramid fibrous material about a mandrel which is covered with insulation material until the desired shape for the rocket motor case has been achieved. The wound case is then appropriately cured and the mandrel removed after which the solid propellant formulation is poured and thereafter cured. Usually, it is desirable to leave a void or empty space in one end of the rocket motor such as at the aft end for various design considerations. While such a method of making a composite case rocket motor is generally satisfactory, the case must be manufactured with a larger than may be desired opening to allow room for removal of the mandrel. In addition, during ordinary day to day manufacturing operations, it may be desired that a case have a particular configuration. However, it may be necessary to wait for such a case to be made in order to produce the rocket motor.

The winding of a composite material case onto a solid propellant grain, such as suggested in US-A- 3,316,842 to Schulz, would allow such a smaller opening since it would not be necessary to remove a mandrel after the case is wound. It would also serve to eliminate the necessity to wait for a rocket motor case of a specified configuration to be built since the case may be wound about the solid propellant grain as soon as it is provided. FR-A-2057819 discloses a solid propellant propulsion unit wherein a stack of discs of solid propellant is supported by a hollow tube extending axially through aligned central holes in the discs. The ends of the tube support a shell which is made of a plastics material resistant to the temperature and chemical action of the propellant and which encloses the stack, leaving voids around it. Resin - impregnated glass filaments are then wound onto the plastics shell and cured to form the case.

According to US-A-2995011, a cylindrical propellant grain is supported by end plates bonded to its axial ends and is completed by hollow hemispherical shells at each end, within which voids are defined. The grain has an axial aperture through which passes a mandrel to support the grain during winding-on of epoxy-resin-reinforced glass fibre rovings to form the case.

There have, however, been difficulties in achieving a satisfactory rocket motor by the use of case on grain techniques. The consistency of the solid propellant grain has been such that the grain would tend to sag or otherwise distort in shape as the filamentary material is wound thereon. In addition, the case must be wound around an envelope which contains the aforesaid voids or empty space which are not supportive of the envelope for such winding.

The present invention consists in a method of making a gas generator comprising the steps of:
a) providing a solid propellant composition which, when cured, has a modulus of rigidity of at least 13.79 MPa (2000 psi);
b) curing the propellant composition and making therewith a gas generating grain which has a surface for winding a case thereon, and end surface and a space inwardly of an extension of said winding surface and contiguous with the grain over at least a portion of its end surface;
c) substantially filling the said space with a removable structure having a modulus of rigidity of at least 13.79 MPa (2000 psi) to provide support for filament winding of a case onto the grain;
d) rotating the grain as a mandrel and filament winding a case onto the grain; and
e) removing the removable structure

A preferred embodiment of the invention will now be described with reference to the accompanying drawings wherein:
Figure 1 is a side view, half in cross section, of a solid propellant grain which has been prepared in accordance with the method of the present invention for winding of a case thereon; and
Figure 2 is a perspective view illustrating the winding of a case in accordance with the present invention onto the grain of Figure 1.

### DETAILED DESCRIPTION OF THE PREFERRED EMBODIMENTS

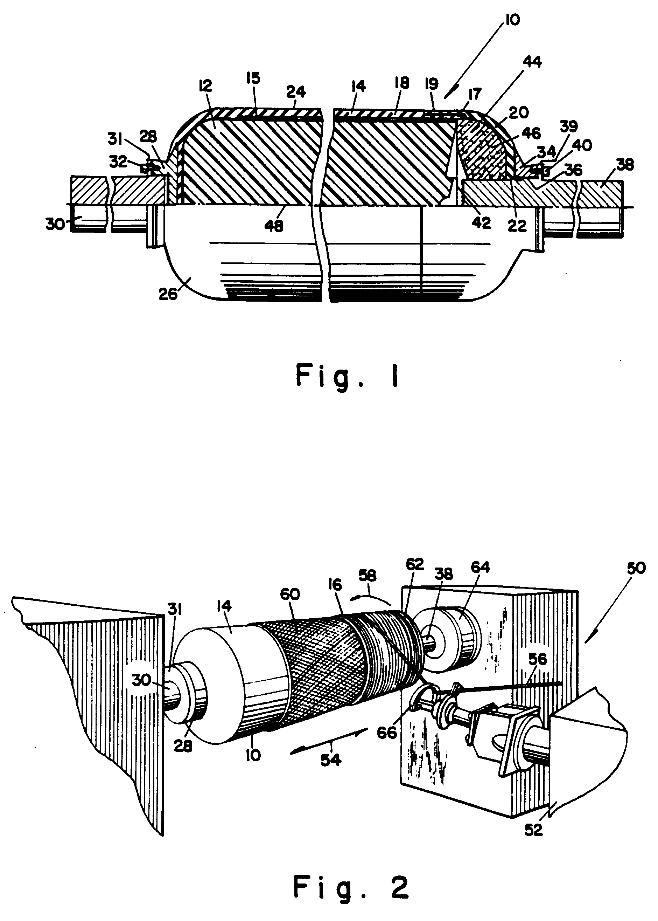

Referring to Figure 1, there is shown generally at 10 a solid propellant grain for a gas generator such as a rocket motor. The grain 10 may be formed by any suitable process such as the pouring of a solid propellant composition, which will be described hereinafter, into a female mold having the desired envelope shape and in which a suitable insulation cup has been placed and allowing the propellant material to cure at a suitable temperature and pressure for a suitable length of time in accordance with principles commonly known to those of ordinary skill in the art to which this invention pertains. The grain 10 includes the cured solid propellant material 12 which, after curing, is in a solid form and also includes suitable insulation material 14, which surroundingly engages and is suitably bonded to the propellant material 12 in accordance with principles and procedures commonly known to those of ordinary skill in the art to which this invention pertains, to be positioned between the propellant material 12 and the case 16 (shown in Figure 2). The case 16 is shown partially applied to the grain 10 in Figure 2. The insulation material 14 includes an insulation cup 18 which extends over substantially the length of the grain 10 and an aft insulator 20 which partially overlaps insulator cup 18 and which is bonded or otherwise suitably attached thereto along the decreased thickness overlapping portions 17 and 19 for the insulation cup 18 and aft insulator 20 respectively to insure insulation integrity and a smooth insulator outer surface 24. Aft insulator 20 extends to the aft opening 22 whereby the outer surface 24 of the insulation 14 defines an envelope upon which case 16 is to be wound. The insulation material 14 may be injection molded from EPDM rubber or other suitable insulating material. The insulation cup 18 is provided with a conventional stress relieving slit 15 to insure against de-bonding of the propellant material 12 therefrom as it contracts during cooling.

Bonded or otherwise suitably attached to the insulation cup 18 at the forward end 26 of the grain 10 is a boss 28, composed of aluminum or other suitable material, to which is attached a flange 31 of forward arbor 30 by suitable means such as a plurality of screws 32 which are circumferentially spaced about the circumference of the boss 28.

Bonded or otherwise suitably attached to the aft insulator 20 is another boss 34 to which may be attached a suitable nozzle after the rocket motor has been built. Polar boss 34, which is composed of aluminum or other suitable material, has an opening 36 which is substantially of the same diameter as opening 22. An aft arbor 38 is inserted in the openings 22 and 36 to extend inwardly thereof but spaced slightly from the propellant material 12. Aft arbor 38 has a flange 39 which is suitably attached to the polar boss 34 such as by a plurality of screws 40 which are circumferentially spaced about the circumference of the boss 34.

The grain 10 is of the end burner type. If the grain were of a perforated type wherein a perforation extends coaxially over the entire length of the propellant material 12, it may be desirable in accordance with an alternative embodiment of the present invention to utilize a single arbor passing coaxially all the way through the grain 10.

In order to achieve particular requirements of ballistic performance for a specific rocket motor, it may be desired that the propellant material not extend entirely to the insulator opening 22 but instead terminate short thereof. As shown in Figure 1, the propellant material 12 terminates at surface 42 leaving a void or empty space illustrated at 44 inwardly of the aft insulator 20 whereby the aft insulator 20 would be inadequately supported for the winding of filamentary material for a case 16 thereabout. In order to adequately support insulation 14 including the aft insulator 20 in accordance with the present invention, a removable support structure 46, which will be described in greater detail hereinafter, is positioned in the empty space 44 inside the envelope surface 24 to support the insulation 14 against sagging or distortion as a case 16 is wound thereabout. If a grain were configured to have any additional voids or empty spaces within the envelope 24 which would require similar support for the winding of a case on the grain, similar support structures may also be provided therein.

Since in accordance with the present invention there is no mandrel to be removed after the case 16 is wound about the grain 10, the opening 22 and 36 may be made smaller than would otherwise be required in a conventionally wound case to allow the attachment of a smaller and thus lighter polar boss 34 and thus achieve reduced rocket motor weight. The construction of bosses 28 and 34 of aluminum or other suitable light weight material also contributes to reduced weight of a rocket motor.

Typical rocket motor solid propellant grains may have a modulus of rigidity in the range of 2.76 to 6.89 MPa, about 400 to 1000 psi (pounds per square inch). Such a grain may sag or deform undesirably under the stresses of winding a case thereabout. In order to prevent such sagging or distortion so that a satisfactory rocket motor may be made in accordance with the present invention, the propellant material 12 is formulated so that, when cured, it has an increased modulus of rigidity. As the modulus of rigidity is increased, the tendency to sag or distort is accordingly decreased. In order to suitably prevent such sagging or distortion in accordance with the present invention, the propellant material 12 is formulated so that the solid propellant grain 10 has a modulus of rigidity which is equal to at least 13.79 MPa (about 2000 psi), more preferably at least 27.58 MPa (about 4000 psi).

An example of a propellant composition which provides a grain 10 having a modulus of rigidity of at least 27.58 MPa is as follows wherein the percentages of ingredients are by weight percent:

| INGREDIENT | PERCENT |
|---|---|
| Carboxyl terminated polybutadiene and a trifunctional epoxide curative in a functional cure ratio (epoxy groups to carboxyl groups) of 1.20 to 1 | 19.73 |
| Chromium octoate cure catalyst | 0.02 |
| Carbon black opacifier | 0.25 |
| Oxamide coolant | 2.50 |
| Dihydroxyglyoxime | 32.00 |
| Ammonium perchlorate | 45.50 |

Further in accordance with the present invention, the support structure 46 has a modulus of rigidity equal to at least 13.79 MPa, more preferably at least about 27.58 MPa.

The support structure 46 may be composed of any suitable material which is removable and has a modulus of rigidity of at least 13.79 MPa, more preferably at least 27.8 MPa, in order to prevent sagging or distortion in the portion of the envelope 24 surrounding the otherwise empty space 44. For example, the support structure may be composed of a urethane foam, or it may be composed of a dry sand treated with a silicate binder or other suitable binder. The support foam or dry sand with binder may be poured into the aft insulator 20 with the boss 34 and arbor 38 attached thereto and suitably allowed to cure, then the aft insulator 20 with the resulting support structure 46 therein may be bonded to the insulator cup 18.

Referring to Figure 2, in accordance with the present invention, after the grain 10 has been prepared as shown in Figure 1, it is mounted for rotation about its longitudinal axis 48 in a filament winding machine generally illustrated at 50 by rotatably securing the arbors 30 and 38 in chucks 64 thereof. The filament winding machine 50 includes a carriage 52 which is movable parallel to the longitudinal axis 48 of the grain 10, as illustrated at 54, to guide filaments 56 of resin impregnated fibrous material onto the grain 10 as the grain 10 is rotated as illustrated at 58.

While the filament winding machine 50 may be of any suitable type, it is preferred that it be of a type which is suitably computer controlled such as the model W-60 triple axis filament winding machine sold by McClean-Anderson, Inc. of Milwaukee, Wisconsin so that proper fiber placement may be maintained without having to stop and make adjustments to the sprocket and gears. In this type of machine, an electronic feedback system (position encoders) and a drive system work in a closed loop "dialogue" with a microcomputer. Each encoder defines the position or particular point of the axis it controls. The computer also reads tachometers to determine if the speed of the axis is correct. The computer then calculates where the axis will be next and compares this information to the predetermined program. If any deviation or error is detected, the computer sends a command to increase or decrease the speed of the axis until it synchronizes with the position and speed calculated to be necessary for the particular fiber placement pattern. This not only permits a conservation of time but also allows the winding of patterns which require complex variations of processing parameters. Thus, the computer controlled filament winding machine provides versatility of fiber winding patterns as well as conservation of time. The McClean Anderson Model W-60 machine also includes a fiber impregnation bath and a rotating eye with 180 degrees rotation to provide additional flexibility. However, it should be understood that the present invention is not limited to this type of machine but may utilize any suitable filament winding machine.

Conventional filament winding techniques typically include interspersing the helical and hoop windings in order to provide increased rigidity. However, such interspersion of windings may result in lost strength. With the solid propellant 12 providing a desirably increased rigidity as previously discussed, in order to obtain increased strength in accordance with a preferred embodiment of the present invention, the case 16 is wound by applying firstly a plurality of helical windings to provide an inner portion illustrated at 60, and, after all of the helical windings have been applied, applying a plurality of hoop windings to provide an outer portion illustrated at 62. In other words, the helical windings 60 and the hoop windings 62 are not interspersed with each other. By helical winding is meant to refer to a winding wherein filaments of fibrous material extend over the surface of a mandrel, or with respect to the present invention the grain 10, at a large angle relative to a radial plane thereof, i.e., for the purposes of this specification and the claims, an angle greater than about 10 degrees relative to the radial plane. For example, the angle may usually be in the range of about 30 to 70 degrees such as about 64 degrees. By hoop winding is meant a winding wherein the filaments extend circumferentially around a mandrel, i.e., the grain 10, in generally the radial plane, i.e., at an angle less than about 5 degrees relative to the radial plane. This hoop winding angle may normally be less than about 1 degree such as about 0 degrees. By radial plane is meant a plane which is normal to the axis 48. The helical and hoop windings may be applied and suitably cured using principles commonly known to those of ordinary skill in the art to which this invention pertains.

After the case 16 has been wound about the grain 10 and cured, the arbors 30 and 38 and the removable support 46 are then removed. The resulting rocket motor may then have a nozzle attached to the aft boss 34, be fitted with an igniter, and otherwise prepared for use.

## Claims

1. A method of making a gas generator comprising the steps of:
a) providing a solid propellant composition which, when cured, has a modulus of rigidity of at least 13.79 MPa (2000 psi);
b) curing the propellant composition and making therewith a gas generating grain (10) which has a surface (24) for winding a case thereon, an end surface (42) and a space (44) inwardly of an extension of said winding surface and contiguous with the grain over at least a portion of its end surface;
c) substantially filling the said space with a removable structure (46) having a modulus of rigidity of at least 13.79 MPa (2000 psi) to provide support for filament winding of a case onto the grain;
d) rotating the grain as a mandrel and filament winding a case (16) onto the grain; and
e) removing the removable structure (46)

2. A method according to claim 1 wherein the modulus of rigidity of each of the solid propellant material (12) and the removable structure (46) is equal to at least 27.58 MPa (4000 psi).

3. A method according to claim 1 or claim 2 wherein the step of filament winding the case comprises first winding an inner portion of the case by applying a plurality of helical windings (60) and secondly, after all of the helical windings have been applied, winding an outer portion of the case by applying a plurality of hoop windings (62) whereby the helical and hoop windings are not interspersed.

4. A method according to any preceding claim wherein at least one arbor (30,38) is attached to the grain (10) for rotating of the grain during filament winding of the case (16) thereon.

5. A method according to any preceding claim further wherein the removable structure (46) is composed of sand and a binder.

6. A method according to any one of claims 1 to 4 wherein the removable structure (46) is composed of urethane foam.

7. A method according to any preceding claim wherein the surface (24) for the winding of the case is formed by insulation material (18,20) which surroundingly engages the solid propellant material and is supported by the removable structure (40).

8. A method according to claim 7 wherein the gas generating grain is made in two parts and which comprises the steps of:
a. providing around the said solid propellant material (12) a first portion of insulation material (18) which surroundingly engages the solid propellant material and defines a portion of the surface for filament winding of a case thereabout;
b. providing a second portion of insulation material (20) which defines another portion of said surface;
c. substantially filling empty space (44) inwardly of the second portion of insulation material (20) with the removable structure (46) to support the second portion of insulation material for filament winding of a case;
d. attaching the second portion of insulation material (20) with the removable material inwardly thereof to the first portion of insulation material;
e. filament winding a case (16) about said surface; and
f. removing the removable structure (46).

## Patentansprüche

1. Verfahren zur Herstellt eines Gasgenerators, **gekennkennzeichnet durch** die Verfahrenschritte
a) Aufbereitung einer Festtreibstoff-Zusammensetzung, welche, wenn ausgehärtet, einen Festigkeitsmodul von mindestens 13.79 MPa (2000 psi) aufweist;
b) Aushärten dieser Festtreibstoff-Zusammensetzung und Anfertigen eines Gasgenerator-Kerns (10), der eine Oberfläche (24) für das Wickeln eines Gehäuses (16) auf dieser, eine Endfläche (42) und einen Zwischenraum (44) innenseitig einer Verlängerung der Wickelfläche und anschließend des Kerns über mindestens eine Teil seiner Endfläche aufweist;
c) Füllen des Zwischenraums mit einer wiederentfernbaren Masse (46) mit einem Festigkeitsmodul von zumindest 13.79 MPa (2000 psi) zur Stützung der auf den Kern aufzubringenden Filament-Wicklung für das zu bildende Gehäuse;
d) Drehen des Kerns als Dorn und Filament-Wickeln eines Gehäuses (16) auf den Kern; und
e) Entfernen der Stützmasse-Struktur (46) aus dem Zwischenraum.

2. Verfahren nach Ansprcu 1, **dadurch gekennzeichnet,** daß der Festigkeitsmodul vom jedem, dem Festtreibstoff-Matrial (12) und der Stützmasse-Struktur (46) gleich oder mindestens 27.58 MPa (4000 psi) ist.

3. Verfahren nach Anspruch 1 oder 2, **dadurch gekennzeichnet,** daß der Verfahrensschritt der Filament-Bewicklung für das zu erstellende Gehäuse zuerst das Wickeln eines inneren Bereichs des Gehäuses mit einer Anzahl spiralförmiger Windungen (60) und zweitens, nachdem alle dieser spiralförmigen Windungen aufgebracht sind, das Wickeln eines äußeren Bereichs des Gehäuses durch Aufbringen einer Anzahl ringförmiger Windungen (62) umfaßt, wobei die spiral- und ringförmigen Wicklungen voneinander getrennt und nicht miteinander vermischt sind.

4. Verfahren nach einem der Ansprüche 1 bis 3, **dadurch gekennzeichnet,** daß mindestens ein Dornansatz (30,38) zur Drehung des Kerns (10) während des Filament-Wickelns des Gehäuses (16) am Kern befestigt ist.

5. Verfahren nach einem der Ansprüche 1 bis 4, **dadurch gekennzeichnet,** daß die entfernbare Stützmasse-Struktur (46) aus Sand und einem Binder zusammengesetzt ist.

6. Verfahren nach einem der Ansprüche 1 bis 4, **dadurch gekennzeichnet,** daß die entfernbare Stützmasse-Struktur (46) aus Urethnnschaum besteht.

7. Verfahren nach einem der Ansprüche 1 bis 6, **dadurch gekennzeichnet,** daß die Fläche (24) für das Wickeln des Gehäuses (16) durch Isolations-Material (18,20) gebildet wird, welches das Festtreibstoff-Material anliegend umschließt und mittels der entfernbaren Stützmasse-Struktur (46) abgestützt wird.

8. Verfahren nach Anspruch 7, **dadurch gekennzeichnet,** daß der Gasgeneratorkern aus zwei Teilen gefertigt wird und die folgenden Verfahrensschritte umfaßt:
a) Aufbringen um das Festtreibstoff-Material (12) eines ersten Teils des Isolations-Materials (18) welches das Festtreibstoff-Material anliegend umschließt und einen Teil der Fläche für die Filament-Wicklung des Gehäuses um dieses herum ausbildet;
b) Aufbringen eines zweiten Teils Isolations-Material (20) welches einen anderen Teil dieser Fläche ausbildet;
c) Füllen des Zwischenraums (44) innenseitig des zweiten Teils des Isolations-Materials (20) mit der entfernbaren Stützmasse-Struktur (46) zur Stützung des zweiten Teils Isolations-Material für die Filament-Wicklung eines Gehäuses;
d) Befstigen des zweiten Teils Isolations-Material (20) mit der entfernbaren Stützmasse einwärts desselben am ersten Teil des Isolations-Materials;
e) Filament-Wickeln eines Gehäuses (16) um diese Fläche; und
f) Entfernen der Stützmasse-Struktur (46).

## Revendications

1. Un procédé de fabrication d'un générateur de gaz comprenant les étapes suivantes :
a) produire une composition de propergol solide qui, après traitement, a un module de rigidité d'au moins 13,79 MPa (2000 psi) ;
b) traiter la composition de propergol et en faire un bloc générateur de gaz (10) présentant une surface (24) pour y enrouler un boîtier, et une surface d'extrémité (42), ainsi qu'un espace (44) à l'intérieur d'un prolongement de ladite surface d'enroulement, adjacent au bloc sur au moins une partie de sa surface d'extrémité ;
c) remplir pratiquement ledit espace avec une structure amovible (46) ayant un module de rigidité d'au moins 13,79 MPa (2000 psi) pour former un support pour l'enroulement filamentaire d'un boîtier sur le bloc ;
d) faire tourner le bloc comme un mandrin et constituer un boîtier (16) sur le bloc par enroulement filamentaire ; et
e) retirer la structure amovible (46).

2. Un procédé selon la revendication 1 dans lequel le module de rigidité du propergol solide (12) ainsi que de la structure amovible (46) est d'au moins 27,58 MPa (4000 psi).

3. Un procédé selon la revendication 1 ou 2, dans lequel l'étape d'enroulement filamentaire du boitier consiste à enrouler d'abord une partie interne du boîtier en appliquant une pluralité d'enroulements en hélice (60) et ensuite, après que tous les enroulements en hélice ont été appliqués, à enrouler une partie externe du boîtier en appliquant une pluralité d'enroulements en cercle (62), afin que les enroulements en hélice et les enroulements en cercle ne soient pas entremêlés.

4. Un procédé selon l'une quelconque des revendications précédentes dans lequel au moins un arbre (30, 38) est fixé au bloc (10) pour faire tourner le bloc durant l'enroulement filamentaire du boitier (16).

5. Un procédé selon l'une quelconque des revendications précédentes, dans lequel la structure amovible (46) est composée de sable et d'un liant.

6. Un procédé selon l'une quelconque des revendications 1 à 4, dans lequel la structure amovible (46) est composée de mousse urétane.

7. Un procédé selon l'une quelconque des revendications précédentes dans lequel la surface (24) prévue pour l'enroulement du boîtier est formée par un isolant (18, 20) qui recouvre le propergol solide et est supporté par la structure amovible (46).

8. Un procédé selon la revendication 7 dans laquelle le bloc générateur de gaz est fabriqué en deux parties, et qui comprend les étapes suivantes:
a) prévoir autour dudit propergol solide (12) une première partie d'isolant (18) qui recouvre le propergol solide et définit une partie de la surface prévue pour l'enroulement filamentaire d'un boîtier ;
b) prévoir une seconde partie d'isolant (20) qui définit une autre partie de ladite surface ;
c) remplir pratiquement l'espace vide (44) à l'intérieur de la seconde partie de l'isolant (20) avec la structure amovible (46) pour supporter la seconde partie de l'isolant pour l'enroulement filamentaire d'un boîtier ;
d) fixer la seconde partie de l'isolant (20) contenant à l'intérieur le matériau amovible, avec la première partie de l'isolant ;
e) fabriquer par enroulement filamentaire un boîtier (16) autour de ladite surface ; et
f) retirer la structure amovible (46).
